# EUROPEAN PATENT APPLICATION

(11) **EP 4 617 912 A1**
(43) Date of publication of application: **17.09.2025**
(21) Application number: 24163394.0
(22) Date of filing: 13.03.2024
(51) Int. Cl.: G06F 16/9032

(54) **COMPUTER-IMPLEMENTED METHODS AND SYSTEM FOR VISUAL SEARCH**

(71) Applicant: TOYOTA JIDOSHA KABUSHIKI KAISHA, Toyota-shi, Aichi-ken, 471-8571 (JP); INSAIT, 1784 Sofia (BG)
(72) Inventor: VAN LOOCK, Mark, 1140 Brussels (BE); MEIER, Sven, 1140 Brussels (BE); HOLUBAKHA, Mykyta, 1784 Sofia (BG); WANG, Xi, 1784 Sofia (BG); PAUDEL, Danda Pani, 1784 Sofia (BG); VAN GOOL, Luc, 1784 Sofia (BG)
(74) Representative: Cabinet Beau de Loménie

(57) **Abstract**

A computer-implemented method for visual search is provided. The method includes: transmitting to a language model a textual description describing a task to be completed by the language model through searching a visual space; instructing the language model to complete the task by selectively inspecting at least one portion of the visual space, wherein the inspection includes deducing, based on the textual description, an identifier identifying one of the at least one portion within the visual space, requesting a visual description of the portion from the computer by returning the identifier, and determining whether the task is completed based on the visual description; receiving the identifier from the language model; generating the visual description; and transmitting the visual description to the language model, so that the language model outputs a final response indicating an execution result of the task after determining whether the task is completed.

## Description

### BACKGROUND OF THE INVENTION

### 1. Field of the Invention

The invention relates to the technical field of computer vision, and in particular, to computer-implemented methods, computing devices, and a system for visual search.

### 2. Description of Related Art

As video content increases in volume, the need for automated methods to find specific visual content for retrieval or editing has become increasingly critical [1, 2]. This task, essentially exploring an unknown environment for something, necessitates sophisticated tools. To address this, a variety of video analysis and understanding approaches have been introduced, including Video-LanguagE Transformer (hereinafter "VIOLET") [3], Intern Video [4], Frozen BiLM [5], and, mPLUG-Owl [6].

### SUMMARY OF THE INVENTION

Computer-implemented methods, computing devices, and a system for visual search are disclosed herein. Unless otherwise stated, the term "or" hereinafter shall be interpreted as "and/or".

In a first embodiment, a method for visual search includes a step of transmitting to a language model a textual description describing a task to be completed by the language model through searching a visual space. The method is implemented by a first computing device through running a first computer program other than the language model. The language model may be installed on and executed by the first computing device or a second computing device. Accordingly, the term "from/to the first computing device" used herein shall be interpreted as meaning "from/to the first computer program".

The method further includes a step of instructing the language model to complete the task by selectively inspecting at least one portion of the visual space. Such a step may be implemented by transmitting to the language model one or more instructions. The one or more instructions may be transmitted together or separately. Any one of the instruction(s) may be transmitted together with the textual description, or prior to or after the transmission of the textual description.

In particular, the first computing device instructs the language model to perform the inspection of the at least one portion by: (logically) deducing, based on the textual description, an identifier identifying one of the at least one portion within the visual space; requesting a visual description of the portion from the computer program by returning the identifier; and determining whether the task is completed based on the visual description.

Further, the method includes a step of receiving the identifier from the language model, a step of generating the visual description, and a step of transmitting the visual description to the language model so that the language model outputs a final response indicating an execution result of the task after determining whether the task is completed.

The term "language model" herein refers to a machine learning model including a probabilistic model of natural language that is able/configured to understand and generate natural language text. As is known in the art, such a probabilistic model is usually equipped with common sense linguistic reasoning abilities, allowing it to deduce, infer, or hypothesize about how to complete the task. These capabilities are crucial for understanding the overarching structure of the visual space and navigating within it. Even if the probabilistic model is blind to vision by design and can only accept discrete text as its input, the above-described method enables an efficient exchange between visual and textual domains, and improves the efficiency and accuracy of existing automated visual search approaches. Specifically, by leveraging the language model's commonsense linguistic reasoning capability to guide the search in the visual space and updating the language model's understanding of the visual space through the visual description, the method is able to efficiently complete the task by inspecting as few visual space portions as possible.

Below, particular examples of the first embodiment are described, each of which is compatible with every other example described herein.

The term "visual description of the portion" may refer to a textual description of at least part of the vision contents (also referred to as "contents") of the visual space portion. It may be generated by analyzing the visual space portion. The analysis may be implemented by using an object detector or a visual question answering (hereinafter "VQA") model, specific examples of which will be introduced below.

The language model may be pre-trained. As can be appreciated from the description above, the language model has common sense linguistic deduction ability. Examples of the probabilistic model include a neural network model such as one with non-linear hidden layer(s), or, a model including a transformer structure/layer. The transformer structure is usually defined as a neutral network that learns context and thus meaning by tracking relationships in sequential data like words in a sentence. It has been introduced in various papers, including references [7, 8, 9, 10]. In one example, the language model is a large language model (hereinafter "LLM"), which is a type of artificial intelligence model that is able to recognize and generate vast quantities of written human language and textual data. LLMs are usually trained on large-scale data with different data modalities through deep learning algorithms and can be equipped with millions (e.g., the bidirectional encoder representations from transformers (herein "BERT")), billions (e.g., PaLM 2), or even trillions of trainable parameters. LLMs have exhibit exceptional few-shot and zero-shot performance across various tasks [11, 12, 13, 14]. In particular, they have demonstrated great success in common sense linguistic reasoning and are immensely useful in guiding vision-only models for complex visual tasks [15, 16]. The inventors have observed through experiments that LLMs excel in following instructions, especially in terms of adhering to specific response formats and protocols, and have excellent deduction ability, which increase the efficiency and accuracy of the visual search. A specific example of the LLM used in the method is the generative pre-trained transformer 4 (hereinafter "GPT-4") created by OpenAI.

In another example, the textual description may describe a target to be found by the language model through searching the visual space. Examples of the search target include an object, an action, or an answer to a question related to the contents of the visual space. It is noted that the term "object" herein refers to any animate being or inanimate physical substance, such as a human, an animal, a plant, water, a mountain, a bicycle, and etc. The term "action" herein may refer to the process of doing something or refer to something that happens, such as an action, an occurrence, an event, or an activity. Accordingly, the task may include localizing the object or action within the visual space, or include answering the question.

Moreover, the textual description may confirm the presence of the target in the visual space. Experiments show that this approach could improve the method's success rate by at least 10%.

Alternatively or additionally, the textual description may describe multiple choices of the answer to the question if the task includes finding the answer, which could enhance the efficiency and accuracy of the visual search.

As can be appreciated, the identifier is one deduced by the language model as identifying a visual space portion where the inspection should be performed to complete the task or where a search target of the task, described in the textual description, is likely to be found. In practice, depending on the textual description or the search technique utilized by the language model, the identifier may be one deduced by the language model as delimiting a particular segment of the visual space, or one deduced by the language model as identifying a visual space portion that is likely to be included in the particular segment. The particular segment may be deduced by the language model based on the textual description as one where the inspection should be performed, or where the search target of the task is likely to be found. In such a manner, the language model efficiently guides the visual search in the visual space.

In still another example, the method further includes a step of receiving a request entered by a user or transmitted from a third computing device. The request indicates a target to be found through searching the visual space. It may further identify the visual space to facilitate locating the visual space. For instance, the request may include a link to access or download the visual space if the visual space is a video or a two-dimensional (hereinafter "2D") image. Alternatively, the request may indicate the geolocation of the visual space if the visual space is a real-world three-dimensional (hereinafter "3D") scene. The method further includes a step of generating the textual description based on the request.

Further, the request may also confirm the presence of the target in the visual space. Or, the method may further include a step of instructing the user or the third computing device to confirm the presence of the target in the visual space.

In still another example, the language model outputs the final response to a user or third computing device requesting the task to be completed. Alternatively, the first computing device may receive the final response from the language model and output a response to the user or the third computing device based on the final response. In addition, the response output to the user or the third computing device may indicate the location of a search target of the task in the visual space (e.g., it may indicate the identifier of the visual space portion where the search target is located) if the task includes locating the target in the visual space, or it may include the answer to a question related to the contents of the video if the task includes the question.

The method is applicable in various scenarios. For example, the visual space is a video, and the identifier includes a timestamp locating a frame in the video. Or, the visual space is a 2D image, and the identifier includes location information of the portion in the image. For instance, the portion may be marked by a bounding box, and the location information includes coordinates of the bounding box. Or, the visual space is a computer-generated 3D scene, and the identifier includes a viewpoint and an orientation for rendering an image of the 3D scene. Or, the visual space is a real-world 3D scene, and the identifier includes a viewpoint and an orientation for capturing an image of the 3D scene.

In still another example, the method further includes informing the language model of the maximum number of portions of the visual space that the language model is allowed to inspect to complete the task. Such information may be included in the aforementioned one or more instructions. This example could enhance the language model's search efficiency.

In still another example, the method further includes instructing the language model not to refuse to complete the task due to insufficient information. This example could reduce the number of cases where the language model gives up early.

In still another example, the method further includes a step of obtaining the range or the upper limit of the identifier's value. The textual description indicates the range or upper limit. For instance, if the visual space is a video, the duration of the video is extracted and is included in the textual description. Or, if the visual space is a 3D scene, the range of appropriate viewpoints or orientations for rendering or capturing imaging of the 3D scene may be determined and included in the textual description. Or, if the visual space is a 2D image, the resolution of the image may be determined and included in the textual description. This could enhance the efficiency and accuracy of the language model's deduction.

In still another example, the method further includes a step of obtaining the portion from the visual space using the identifier prior to generating the visual description of the portion. For instance, if the visual space is a video, or a 2D image, this obtaining step may include copying the contents of the specified visual space portion to create an image file containing the contents. Or, if the visual space is a 3D scene, the obtaining step may include rendering or using a camera to capture an image of the 3D scene on the basis of the specified viewpoint and orientation.

The camera may be included in or carried by the first computing device or another computing device. Specifically, the visual space may be a real-world 3D scene, the camera may be able to take images of the 3D scene at its current location or after being moved to another location different from its current location. In the latter case, if the camera is included in or carried by the first computing device, the first computing device may be able to move from one place or another. Or, if the camera is included in or carried by the other computing device, the first computing device may be able to remotely control the other computing device to move from one place or another. Examples of such moveable devices include a robot, an autonomous vehicle, a drone, or an autonomous smart home device. If the camera is included in or carried by the other computing device, the first computing device may instruct the other computing device to move to (the vicinity of) the geolocation of the 3D scene before the camera is controlled to take the image of the 3D scene.

In still another example, after receiving the identifier from the language model, the method further includes a step of detecting at least one object or action in the portion via an object detector that is installed on the first computing device or another computing device. The visual description describes the at least one object or action. For instance, the visual description may include captions of the at least one object or action generated by the object detector. The term "object detector" refers to a computer program or software that is configured to detect objects or actions in an image (including a video frame). Examples of the object detector include an image tagging model, a VLM, or, a specialized vision expert such as Azure Cognitive Services application programming interfaces (hereinafter "APIs"), including the ones for image captioning, image tagging, dense captioning, optical character recognition, and etc. In particular, the object detector may be the Recognize Anything Model (hereinafter "RAM") [17].

The example above incorporates an object detector to induce an awareness of objects or local content in the textual representation, which enhances the efficiency and accuracy of the visual search.

As can be appreciated, if the object detector is installed on a computing device other than the first computing device, the detecting step may include transmitting the visual space portion to the object detector for analysis and receiving the result of the analysis from the object detector.

In still another example, the method may include informing the language model that the visual description describes at least one object or action in the portion, which may enhance the efficiency of the language model's deduction.

Motivated by the observation that VQA models (such as a vision language model (hereinafter "VLM")) tend to overlook fine-grained details while language models might not operate in the visual domain, the following examples use the language model not only to suggest the search location(s) but also to pose a question to a VQA model to guide its focus. These examples employ the VQA model to extract relevant visual information from the visual space portion and translate it into a textual visual description, enabling content-aware dynamic reasoning by the language model. Such an interactive dynamic between the language model and the VQA model ensures an efficient exchange of information and capitalizes on the common sense knowledge extracted from the language model to effectively guide the search in the visual space, ensuring a good visual search outcome, especially given a limited visual space portion budget.

In one of the examples, the method further includes informing the language model that the language model has access to a VQA model installed on the first computing device or another computing device. For example, the first computing device may inform the language model that the language model may ask a VQA model one or more questions. The term "VQA model" herein refers to an algorithm that is able to analyze an image (including a video frame) and provide one or more natural language answers to a question about the image's contents. The VQA model may include a VLM. Introduction of VLMs can be found in various materials such as reference [18]. In particular, the VLM used by the method may be the InstructBLIP model [19]. Other examples thereof include Large Language and Vision Assistant (hereinafter "LLAVA") and GPT-4 Vision. The VQA may be pre-trained.

The method may further include:
- informing the language model of the maximum number of questions about the contents of the portion that the language model is allowed to ask the VQA model to complete the task; or
- instructing the language model to ask at least one question about the contents of the portion; or
- informing the language model that the VQA model is configured to describe one or more objects or activities present in the portion.

Additionally or additionally, the method may further include instructing the language model to refrain from directly asking the VQA model whether a search target of the task is present in the portion. This approach could enhance the accuracy of the visual search.

In another one of the examples, the method further includes a step of receiving from the language model a question about the contents of a portion of the visual space, and a step of generating an answer to the question by using the VQA model to analyze the portion. As can be appreciated, if the VQA model is installed on a computing device other than the first computing device, the answer-generation step includes transmitting the question to the VQA model and receiving the answer from the VQA model. If this portion is the previously mentioned portion whose identifier has been received by the first computing device from the language model, then the visual description may include the answer, or, the method may further include a step of transmitting the answer to the language model. In addition, before receiving the question from the language model, the method may further include a step of instructing the language model to ask the question.

Further, prior to transmitting the question to the VQA model, the answer-generation step may further include determining whether the language model has returned an identifier of the portion, where the question is transmitted to the VQA model in response to determining that the language model has returned the identifier of the portion.

In still another example of the embodiment, the textual description further describes the context of the visual space. For instance, the textual description may include a high-level intent description of the context, such as a summary of the visual space or a set of keywords referring to the topic of the visual space. This example could enhance the efficiency and accuracy of the visual search. In particular, experiments have shown that providing the context of the visual space enables the language model to ask the most suitable question to the VQA model and reduces the number of false positives, leading to a surprisingly good visual search outcome for a given visual space portion budget.

The examples above introduce a visual search paradigm that allows the language and vision algorithms to interact in an intuitive yet novel manner. In particular, the language model can execute fine-grained visual searches which the VQA model tends to overlook, thanks to the textual description and instruction(s) employed by the method.

In the following examples, the language model is instructed to use the chain of thought approach [20] or conduct dynamic reasoning (which existing works performing LLM-assisted visual tasks do not support) through dialogs between the language model and the first computing device which update the language model's understanding of the visual space, thereby enhancing the accuracy and efficiency of the visual search.

In one of the example, the method further includes instructing the language model to apply logical step-by-step reasoning approach to complete the task.

In another one of the examples, the method further includes instructing the language model to explain the deduction of the portion. In particular, the method may include instructing the language model to return an explanation of the deduction of the identifier together with the identifier.

In still another one of the examples, the method includes instructing the language model to perform the inspection further by: in response to determining that the task is not completed based on the visual description, proceeding to the inspection process of another portion of the visual space. The inspection process of each of the at least one visual space portion, instructed by the first computing device, may include: deducing, based on information known to the language model that is related to the task (which may be received from the first computing device, such as the textual description or one or more previously received visual descriptions (if any) for completing the task, or deduced from information received from the first computing device by the language model), an identifier identifying the portion within the visual space; requesting a visual description of the portion from the first computing device by returning the identifier; and determining whether the task is completed based on the visual description of the portion.

As such, the instruction(s) may enable the language model to initially estimate a visual space portion where the inspection should be performed or where a search target of the task is likely to be located, then proceed to inspect the contents of the relevant visual space portion, subsequently refining its comprehension of the visual space, and continue making estimate until it successfully completes the task.

In addition, the aforementioned inspection process of each of the at least one visual space portion may further include explaining the deduction of the corresponding identifier. Specifically, the requesting step in said inspection process may include requesting the visual description by returning both the identifier and the explanation.

Further, the first computing device may specifically instruct the language model to proceed to inspecting the other visual space portion in response to determining that the number of visual space portion(s) the language model has inspected to complete the task does not reach a given limit (also referred to as "visual space portion budget" herein).

In still another example of the first embodiment, the method further includes instructing the language model to output a final response indicating that the task is successfully completed in response to determining that the task is completed. For example, the final response may indicate the location of the search target of the task in the visual space, indicate the answer to the question, or simply indicate that the task is successfully completed.

In still another example, the method further includes instructing the language model to output a final response indicating that the language model fails to complete the task in response to determining that the task is not completed and that the number of visual space portion(s) the language model has inspected to complete the task reaches a given limit. This example enhances efficiency of the visual search.

In a second embodiment, another method for visual search, implemented by a computing device through running an language model, includes a step of receiving from a first computing device a textual description describing a task to be completed by the language model through searching a visual space. As described earlier in the first embodiment, the term "from/to the first computing device" herein shall be interpreted as meaning "from/to a first computer program installed on and executed by the first computing device". The language model is not the first computer program and may be installed on and executed by the first computing device or a second computing device.

The method further includes a step of receiving from the first computing device one or more instructions. The instruction(s) is configured to instruct the language model to complete the task by selectively inspecting at least one portion of the visual space. In particular, the instruction(s) is configured to instruct the language model to perform the inspection by: (logically) deducing, based on the textual description, an identifier identifying one of the at least one portion within the visual space; requesting a visual description of the portion from the first computing device by returning the identifier; and determining whether the task is completed based on the visual description.

The method further includes a step of (logically) deducing the identifier based on the textual description and the rule, a step of returning the identifier to the computer program, a step of receiving the visual description from the computer program, a step of determining whether the task is completed based on the visual description, and a step of outputting a final response indicating an execution result of the task.

Below, particular examples of the second embodiment are described, each of which is compatible with every other example described herein.

In an example, the step of deducing the identifier based on the textual description and the one or more instructions includes a substep of deducing a particular segment of the visual space where the inspection should be performed to complete the task or where a search target of the task is likely to be found. The step further includes a substep of determining an identifier identifying a visual space portion delimiting the particular segment, or, a substep of estimating an identifier of a visual space portion included in the particular segment. The step of returning the identifier includes returning the determined or estimated identifier.

In another example, prior to outputting the final response, the method further includes a step of deducing, based on the visual description or the textual description, another segment of the visual space where the inspection should be performed in response to determining that the task is not completed based on the visual description. The other segment may be contained within the previously mentioned segment. The method further includes a step of estimating another identifier identifying another visual space portion included in the other segment, and a step of requesting a visual description of the other portion by returning the other identifier.

For other examples or implementation details of the second embodiment, please refer to the first embodiment.

In a third embodiment, a computer program product includes instructions which, when executed by a processor, cause the processor to perform the method according to any example of the first or second embodiment.

The computer program product can use nay programming language and take the form of source code, object code or a code intermediate between source code and object code, such as a partially compiled form, or any other desirable form. The computer program product may be embodied as a single program, or alternatively, may include multiple sub-programs that, when executed, operate together to perform the function of the computer program product.

In a fourth embodiment, a computer-readable medium comprising the computer program product of the third embodiment. The medium may be transitory, such as a data carrier signal, or non-transitory. It may be any entity or device capable of storing the computer program product. For example, the medium can include storage means such as a read-only memory (hereinafter "ROM"), a compact disc-ROM, a microelectronic ROM, a random access memory, a dynamic random access memory, a static random access memory, a magnetic hard disk, an optical disk, a floppy disk, a flash memory, an electrically programmable memory, an electrically erasable and programmable memory, any other form of volatile or non-volatile memory known in the art, a data server, etc. Or, the medium can be an integrated circuit in which the computer program product is incorporated, the circuit being adapted to execute the method according to the first embodiment or to be used in its execution.

In a fifth embodiment, a computing device includes a processor and the computer-readable medium according to the fourth embodiment. Examples of the computing device include a high-performance computer, a server (such as a database server, a web server, etc.), a user device (e.g., a laptop computer, a home desktop computer, a mobile device such as a tablet, a smart phone, a wearable device, etc.), an autonomous device (e.g., a vehicle, a drone, a robot, a smart home device, etc.), a distributed cluster of computing nodes and/or processors, or any other computing device suitable for perform one or more operations of the method according to the first or second embodiment.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart of a method for visual search according to embodiments of the invention;
FIGs. 2-4 are swimlane diagrams of specific examples of the method illustrated in FIG. 1;
FIG. 5 schematically illustrates a system for implementing the method illustrated in FIG. 1;
FIG. 6 schematically illustrates an example of a first computing device in the system illustrated by FIG. 5;
FIG. 7 illustrates the true positive rates for video object search;
FIG. 8A illustrates a video object search example, and Fig. 8B illustrates the continuation from Fig. 8A;
FIG. 9 illustrates cumulative success per number of frames curves for each task (used for AUC); and
FIG. 10 illustrates distribution of success and failure results per final number of frames.

### DETAILED DESCRIPTION OF EMBODIMENTS

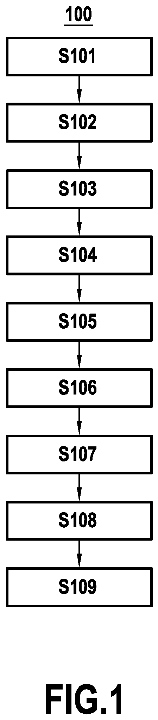

A method for visual search according to embodiments of the disclosure is explained below with detailed examples. For simplicity, the following explanation uses as an example the implementation of the method by a system that includes a first computing device and a second computing device. A language model is deployed on the second computing device. However, it's important to note that the method can also be implemented by a single computing device or a system of another form. As illustrated by FIG. 1, a specific example of the method 100 includes the following steps S101-S109.

At step S101, the first computing device transmits to the second computing device an initial prompt including a textual description describing a task to be completed by the language model through searching a visual space, and an instruction instructing the language model to complete the task by selectively inspecting at least one portion of the visual space. Specifically, the instruction is configured to instruct the language model to inspect the at least one visual space portion by: deducing, based on the textual description, an identifier identifying one of the at least one portion within the visual space; requesting a visual description of the portion from the computer by returning the identifier; and determining whether the task is completed based on the visual description.

The second computing device receives the initial prompt at step S102, uses the language model to deduce the identifier based on the initial prompt at step S103, and returns the identifier to the first computing device at step S104. The first computing device generates the visual description based on the identifier at step S105, and transmits the visual description to the second computing device at step S106. The second computing device receives the visual description at step S107, determines whether the task is completed based on the visual description at step S108, and outputs a final response indicating an execution result of the task at step S109.

Non-limiting example application scenarios of the method include a first one where the visual space is a video and the identifier includes a timestamp locating a frame in the video, a second one where the visual space is a 2D image and the identifier includes location information of a bounding box in the 2D image, or a third one where the visual space is a 3D scene and the identifier includes a viewpoint and an orientation for rendering or capturing an image of the 3D scene. As can be appreciated, the identifier in the first or third example application scenario may further include location information of a particular portion in the frame or the image, and said portion may be marked by a bounding box.

The first example application scenario is illustrated below. For ease of understanding, it is explained with a specific example where the task to be completed by the language model is to find a target through searching the video. Non-limiting examples of the task include localizing the target such as an object or an action in the video, or providing an answer to a question related to the contents of the video.

In this example, the initial prompt is configured to set up the guidelines for the entire process. The textual description includes the duration of the video and a description of the context of the video in addition to the description of the search target of the task. In practice, the first computing device may receive a request entered by a user or transmitted from a third computing device, which indicates the search target of the task, the video context, and a link address to access the video. The first computing device then extracts the duration from the video, and generates the textual description based on the request. The language model may output the final response to the first computing device, which in turn outputs a proper response to the user or the third computing device based on the final response. In particular, the first computing device may use the MoviePy library (based on ffmpeg) to analyze the duration of the video and extract frames using their timestamps (see examples 200-400 below).

The instruction specifies interaction rules between the language model and the first computing device. For instance, the instruction is configured to instruct the language model to find the target by inspecting at most N frames of the video, with N being an integer greater than 1. Specifically, the instruction is configured to instruct the language model to inspect each of the at most N video frames through a process including: deducing, based on the textual information and any previously received visual description of the video, a timestamp where the frame is located in the video, returning both an explanation of the deduction of the timestamp and the timestamp to the first computing device to request a visual description of the frame, and determining whether the task is completed based on the visual description. Moreover, the instruction is configured to instruct the language model to, after inspecting a video frame: proceed to inspecting another video frame in response to determining that the task is not completed and that the number of video frame(s) the language model has inspected is lower than N, or, output the final response in response to determining that the task is completed or that the number of video frames the language model has inspected equals N.

In this example, the system further includes a fourth computing device installed thereon an object detector, and a fifth computing device where a VLM is deployed. The first computing device has access to the object detector and the VLM. The instruction further specifies that the language model may ask up to P questions to the VLM about the contents of each of the at most M frames. Once the first computing device receives a timestamp from the language model, it may extract the frame at the timestamp from the video, transmit it to the VLM or the object detector for analysis, receive the analysis result from the VLM or the object detector, and then transmit the analysis result to the language model.

Moreover, the method further includes a step of transmitting a system prompt to the language model to instruct it to apply logical step-by-step reasoning to complete tasks given to it without refusing to complete the task due to not having enough information.

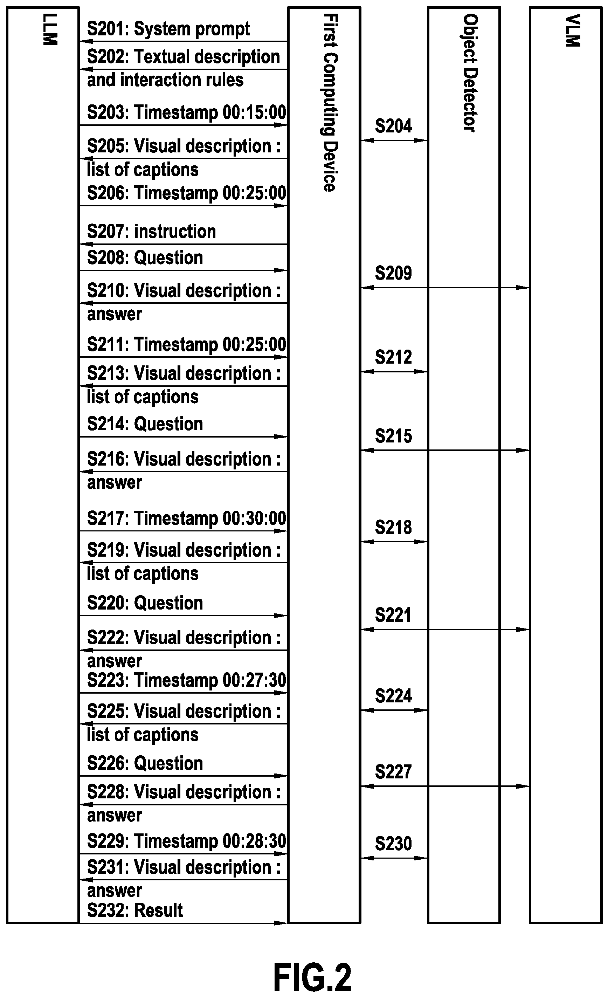

Three real examples 200-400 of the method 100 in the first example application scenario are illustrated below and in FIGs. 2-4 to facilitate understanding of the embodiments and to show their performances. Implementation details are as follows: these examples 200-400 use the OpenAI library for LLM interactions and the GPT-4 API hosted on Azure, using both 8k- and 32k- context-sized models (depending on the input size), with default GPT-4 parameters as suggested by OpenAI. InstructBLIP-Vicuna-13B is used as the VLM. The VLM and LLM models are pretrained. RAM is used as the object detector. These examples operate in a zero-shot setting.

As shown below in these examples, the LLM is primarily configured to coordinate the entire visual search task. Its responsibilities include reconstructing the search space from textual input, directing the VLM's focus by formulating specific queries to extract information from each inspected frame, and updating the search space.

FIG. 2 illustrates an example 200 where a first task is to find an object in a video. At step S201, the first computing device transmits to the LLM a system prompt that reads:
*"You are an expert which applies logical step-by-step reasoning to give answers to questions provided by users. You should not refuse due to not having enough information. You should try to infer the answer using logical reasoning."*

At step S202, the first computing device transmits to the LLM an initial prompt of the first task, including a global video context, a task description, and interaction rules.

The global video context reads:
*"There is a video of baked two pizzas (prepared dough, cooked toppings). Its duration is 00:59:31."*

The task description reads:
*"Your task is to find a timestamp on the video which contains olive. The video definitely contains the target object."*

The interaction rules read:
*"You can ask me for the contents of a frame at any specific timestamp, and I will tell you the objects contained on the frame. You should explain your reasoning and give me an exact guess of the next timestamp to check. Always end your answer after explaining reasoning in exactly the following format:*
*Next timestamp: <TIMESTAMP>*
*If the target object is found, or you have failed to find it, you should output: Result: Success or Result: Failure*
*You also have access to a visual question answering model. For each timestamp, you can ask an expert up to 3 questions about the image content. The expert can only describe the objects and activities present on the frame. Always ask at least one question for each frame. You should not directly ask whether the target object is present. When you want to ask a question about frame contents, end your response in exactly the following format:*
   *Next question: <QUESTION>".*

At step S203, the LLM transmits the following response to the first computing device according to the initial prompt of the first task and the system prompt:
*"Since the video is about baking two pizzas, logically, the ingredients like olives should appear in the first half of the video. This is because the process of pizza making involves preparing the dough, adding the toppings (which includes olives), and then baking the pizzas. Therefore, it is reasonable to assume that the olives would be added before the baking process begins. Let s start by checking the frame at the exact middle of the first half of the video. The first half of the video is approximately 30 minutes, so the middle would be around the 15-minute mark.*
***Next timestamp: 00:15:00"***

At step S204, the first computing device extracts the frame at the specified timestamp from the video, transmits it to the object detector for analysis, and then receives captions of detect objects and actions (if any) from the object detector.

At step S205, the first computing device transmits the following visual description to the LLM:
*"FRAME DESCRIPTION*
*On timestamp 00:15:00 the frame contains the following objects banana, bath room sink, counter top, plate, faucet, hand, person, kitchen counter, kitchen sink, man, sink, soap, sponge, wash* [...]"

At step S206, the LLM transmits the following response to the first computing device based on the visual description:
*"The description of the frame at timestamp 00:15:00 does not contain any pizza ingredients. This suggests that the preparation of the toppings might not have started yet. In a typical pizza preparation process, the dough is prepared first, followed by the preparation of the toppings. Given the absence of pizza-related items in the frame, it is logical to assume that the video is still in the dough preparation stage at this point. Therefore, let's move forward in the video to when the toppings might be prepared. Let's check the frame 10 minutes later.*
***Next timestamp: 00:25:00"***

At step S207, the first computing device receives the response and then transmits the following instruction to the LLM: *"You have to ask a question".*

At step S208, the LLM transmits the following response to the first computing device based on the instruction:
*"Considering the frame description provided for the 15-minute mark, one can infer that it is likely the stage of washing hands or cleaning up before starting to prepare the toppings. To confirm this, I will ask a question related to the activities happening at this moment.*
***Next question: What is the man doing in the kitchen at this timestamp?* "**

At step S209, the first computing device receives the response, extracts the frame at the timestamp of 00:25:00 from the video, transmits the question and the frame to the VLM, and then receives the answer from the VLM.

At step S210, the first computing device transmits the following visual description to the LLM: *"Answer: The man is washing a banana in the kitchen."*

At step S211, the LLM transmits the following response to the first computing device based on the visual description:
*"The answer suggests that the man is still preparing ingredients, which might not be related to the pizza toppings. This reinforces the idea that we should move forward in the video to when the topping preparation might begin.*
***Next timestamp: 00:25:00"***

At step S212, the first computing device receives the response, transmits the above-identified video frame to the object detector for analysis, and then receives captions of detect objects and actions (if any) from the object detector.

At step S213, the first computing device transmits the following visual description to the LLM:
*"FRAME DESCRIPTION*
*On timestamp 00:25:00 the frame contains the following objects plate, floor, food, green, person, kitchen counter, kitchen sink, man, sink, sponge, stool, tool* [...]"

At step S214, the LLM transmits the following response to the first computing device based on the visual description:
*"The frame description for timestamp 00:25:00 suggests that there might be some food preparation happening, as indicated by the presence of food and tool objects. However, we still do not see any specific pizza ingredients mentioned. Given this, I will ask a question to understand the nature of the food preparation happening at this moment, which will help me to decide whether to move forward or backward in the video.*
***Next question: What is the man doing with the food and tools at this timestamp?"***

At step S215, the first computing device receives the response, transmits the question to the VLM, and then receives the answer from the VLM.

At step S216, the first computing device transmits the following visual description to the LLM: *"Answer: the man is cutting food with a knife on a green cutting board."*

At step S217, the LLM transmits the following response to the first computing device based on the visual description:
*"The answer suggests that the man is preparing the toppings for the pizza at this stage, as cutting food is a typical step in topping preparation. However, we are still unsure if the food being cut includes olives. To further confirm, let's move slightly ahead in the video where the cutting process might have proceeded to other ingredients, possibly including olives.*
***Next timestamp: 00:30:00".***

At step S218, the first computing device extracts the frame at the specified timestamp from the video, transmits it to the object detector for analysis, and then receives captions of detect objects and actions (if any) from the object detector.

At step S219, the first computing device transmits the following visual description to the LLM:
*"FRAME DESCRIPTION*
*On timestamp 00:30:00 the frame contains the following objects hand, floor, gas stove, home appliance, person, kitchen floor, man, oven, pot, stool, stove, tool, wood floor.*"

At step S220, the LLM transmits the following response to the first computing device based on the visual description:
*"The frame description at timestamp 00:30:00 includes a stove and oven, suggesting that the cooking process might have begun. This might indicate that the preparation of toppings has already been completed. To confirm this, I will ask a question related to the activities happening at this moment.*
***Next question: What is the man doing with the stove and oven at this timestamp?"***

At step S221, the first computing device receives the response, transmits the question and the frame at the timestamp of 00:30:00 to the VLM, and then receives the answer from the VLM.

At step S222, the first computing device transmits the following visual description to the LLM: *"Answer: The man is fixing the stove and oven".*

At step S223, the LLM transmits the following response to the first computing device based on the visual description:
*"The answer suggests that the man is fixing the stove and oven, which implies that the cooking process has not started yet. This could mean that the preparation of toppings might still be ongoing. Considering this, let's move a bit back in the video to a point where the toppings might still be being prepared.*
***Next timestamp: 00:27:30*"*.***

At step S224, the first computing device extracts the frame at the specified timestamp from the video, transmits it to the object detector for analysis, and then receives captions of detect objects and actions (if any) from the object detector.

At step S225, the first computing device transmits the following visual description to the LLM:
*"FRAME DESCRIPTION*
*On timestamp 00:27:30 the frame contains the following objects cutting board, condiment, counter top, cut, plate, faucet, hand, food, person, kitchen counter, kitchen sink, man, sink, sponge, wash* [...]"

At step S226, the LLM transmits the following response to the first computing device based on the visual description:
*"The presence of a cutting board, food, and the action of cutting in the frame description at timestamp 00:27:30 suggests that the preparation of toppings might still be ongoing at this point. Since we cannot directly ask if olives are present, we need to infer their presence from the actions and objects present.*
***Next question: What kind of food is the man cutting on the cutting board?"***

At step S227, the first computing device receives the response, transmits the question to the VLM, and then receives the answer from the VLM.

At step S228, the first computing device transmits the following visual description to the LLM: *"Answer: cucumbers."*

At step S229, the LLM transmits the following response to the first computing device based on the visual description:
*"The answer suggests that the man is cutting cucumbers at the 00:27:30 timestamp. Since cucumbers are not olives, it means that we haven't reached the point in the video where olives are being prepared. Given this, let's move slightly forward in the video where the cutting process might have proceeded to other ingredients, possibly including olives.*
***Next timestamp: 00:28:30*"*.***

At step S230, the first computing device extracts the frame at the specified timestamp from the video, transmits it to the object detector for analysis, and then receives captions of detect objects and actions (if any) from the object detector.

At step S231, the first computing device transmits the following visual description to the LLM:
*"FRAME DESCRIPTION*
*On timestamp 00:28:30 the frame contains the following objects cutting board, cut, table, plate, food, green, person, kitchen sink, man, olive, platter, sink, stool, tray* [...]".

At step S232, the LLM transmits the following final response to the first computing device based on the visual description:
*"The frame description at timestamp 00:28:30 includes the object 'olive'. This means we have found the point in the video where olives are being prepared or used.*
***Result: Success".***

Then the first computing device may output the timestamp "00:28:30" to a user requesting to find olives in the video.

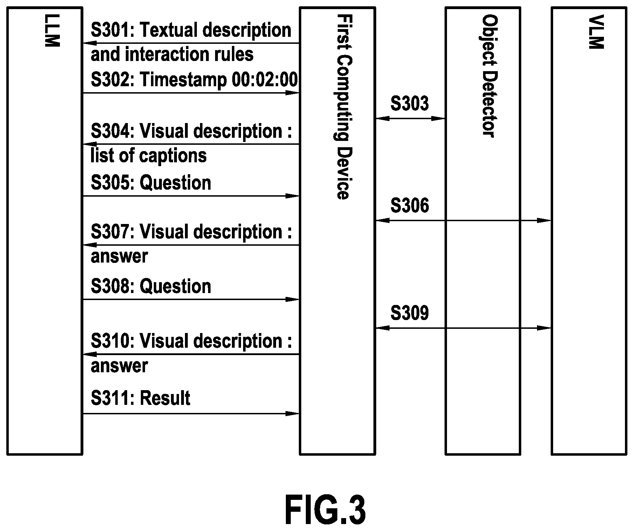

FIG. 3 illustrates an example 300 where a second task is to find an action event in a video. The example may be implemented after the example 200.

At step S301, the first computing device transmits to the LLM an initial prompt of the second task, including a global video context, a task description, and interaction rules. The initial prompt reads:
*"There is an egocentric video from the point of view of a person in a scenario Baker. Its duration is 00:05:13. Your task is to find a timestamp on the video which contains the following action kneading dough. The video definitely contains the target action. You can ask me for the contents of a frame at any specific timestamp, and I will tell you the objects contained on the frame. You should explain your reasoning and give me an exact guess of the next timestamp to check. Always end your answer after explaining reasoning in exactly the following format:*
*Next time stamp: <HH:MM:SS>*
*If the target action is found, or you have failed to find it, you should output Result: Success or Result: Failure*
*You also have access to a visual question answering model. For each timestamp, you can ask an expert up to 3 questions about the image content. The expert can only describe the objects and activities present on the frame. Always ask at least one question for each frame. When you want to ask a question about frame contents, end your response in exactly the following format:*
   *Next question: <QUESTION>."*

At step S302, the LLM transmits the following response to the first computing device based on the initial prompt:
*"Given the scenario that the video is taken from the point of view of a person in a Baker scenario, we can make a few educated guesses about the timing of the kneading dough action. Typically, kneading dough is a critical part of making bread, which usually occurs after the ingredients have been gathered and mixed. This process can take some time, so it's unlikely to happen at the very beginning of the video. Let's start by checking the contents of the video a few minutes in.*
***Next timestamp: 00:02:00*"*.***

At step S303, the first computing device extracts the frame at the specified timestamp from the video, transmits it to the object detector for analysis, and then receives captions of detect objects and actions (if any) from the object detector.

At step S304, the first computing device transmits the following visual description to the LLM:
*"FRAME DESCRIPTION On timestamp 00:02:00 the frame contains the following objects container, dough, hand, food, person, man, oven, pastry, tray* [...]"

At step S305, the LLM transmits the following response to the first computing device based on the visual description:
*"From the frame description, there are several key objects that suggest kneading could be occurring, specifically the 'hand' and 'dough'. However, we need to confirm this. To do so, I'll ask a question to clarify the action happening in the scene.*
***Next question: Is the hand interacting with the dough in this frame?"***

At step S306, the first computing device receives the response, transmits the question and the frame to the VLM, and then receives the answer from the VLM.

At step S307, the first computing device transmits the following answer to the LLM: *"Answer: yes".* Please note that the "visual description" mentioned in the summary herein is also intended to encompass such kind of answer, because it in essence provides a visual description of the frame to the LLM. In other words, such an answer shall also be considered a form of "visual description" mentioned herein.

At step S308, the LLM transmits the following response to the first computing device based on the answer:
*"The answer suggests that the person might be kneading the dough as the hand is interacting with the dough. However, to be certain, let's ask a more specific question.*
***Next question: Is the hand pressing and folding the dough ?"***

At step S309, the first computing device receives the response, transmits the question to the VLM, and then receives the answer from the VLM.

At step S310, the first computing device transmits the following answer to the LLM: *"Answer: yes".*

At step S311, the LLM outputs the following final response to the first computing device based on the answer:
*"Since the hand is pressing and folding the dough, it is safe to infer that the action of kneading the dough is taking place. Therefore, we have successfully found the target action in the video.*
***Result: Success".***

Then the first computing device may output the timestamp "00:02:00" to a user requesting to find the action kneading dough in the video.

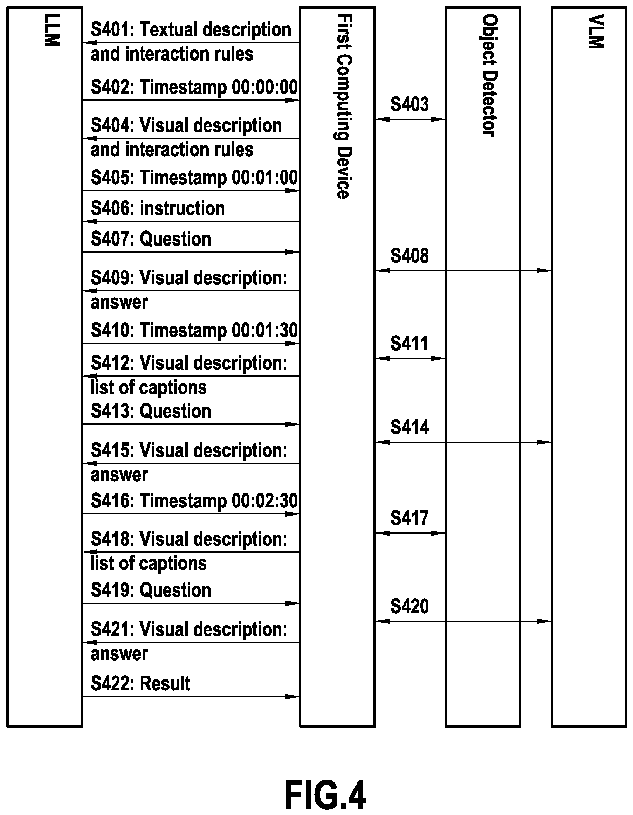

FIG. 4 illustrates an example 400 where a third task is to find an answer to a question related to the contents of the video. The example may be implemented after the example 200.

At step S401, the first computing device transmits to the LLM an initial prompt of the third task, including a global video context, a task description, and interaction rules. The initial prompt reads:
*"There is an egocentric video of a person doing something. Its duration is 00:03:00. Your task is to answer the following multiple-choice question about the contents of the video. Question: Based on the actions performed by c in the video, what do you think is the main objective of her activity? Option A: C is cleaning the desk. Option B: C is preparing to paint a picture. Option C: C is painting a picture on the desk. Option D: C is taking a break from painting. Option E: C is getting ready to clean up her painting supplies.*
*You can look at at most 10 frames for the video. You can ask me for the contents of a frame at any specific timestamp, and I will tell you the objects contained on the frame. You should explain your reasoning and give me an exact guess of the next timestamp to check. Always end your answer after explaining reasoning in exactly the following format:*
   *Next timestamp: <TIMESTAMP>*
   *You also have access to a visual question answering model. For each timestamp, you can ask an expert up to 3 questions about the image content. The expert can only describe the objects and activities present on the frame. Always ask at least one question for each frame. When you want to ask a question about frame contents, end your response in exactly the following format:*
      *Next question: <QUESTION>*
      *When you have figured the answer out and you are sure in it (or after you looked at 10 frames), you should give the answer in EXACTLY the following format:*
         *Answer: <A*/*B*/*C*/*D*/*E>".*

At step S402, the LLM transmits the following response to the first computing device based on the initial prompt:
*"As a first step, I would suggest checking the first frame of the video to get an initial understanding of the setting and the activity that could be taking place. This will provide a baseline for further investigation.*
***Next timestamp: 00:00:00*"*.***

At step S403, the first computing device extracts the frame at the specified timestamp from the video, transmits it to the object detector for analysis, and then receives captions of detect objects and actions (if any) from the object detector.

At step S404, the first computing device transmits the following visual description to the LLM:
*"FRAME DESCRIPTION On timestamp 00:00:00 the frame contains the following objects balustrade, brush, draw, drawing, person, man, sea, paint brush, pencil, stair, stairwell* [...]".

At step S405, the LLM transmits the following response to the first computing device based on the visual description:
*"From the frame's description, we can infer that there are drawing and painting tools present, such as a brush, drawing, paint brush, and pencil. This rules out Option A as cleaning the desk does not require these items. The presence of a man and the activity of drawing indicates that painting or preparing to paint could be the activity taking place. To get more clarity, let's check a timestamp further into the video.*
***Next timestamp: 00:01:00".***

At step S406, the first computing device receives the response and then transmits the following instruction to the LLM: *"You have to ask a question".*

At step S407, the LLM transmits the following response to the first computing device based on the instruction:
*"Given the presence of a man and painting tools, I will ask the following question about the contents of the frame:*
***Next question: Is the man actively using the painting tools at this moment?"***

At step S408, the first computing device receives the response, extracts the frame at the timestamp of 00:01:00 from the video, transmits the question and the frame to the VLM, and then receives the answer from the VLM.

At step S409, the first computing device transmits the following answer to the LLM: *"Answer: yes".*

At step S410, the LLM transmits the following response to the first computing device based on the answer:
*"The fact that the man is actively using the painting tools at the beginning of the video suggests that he could be either preparing to paint a picture (Option B), painting a picture (Option C), or possibly taking a break from painting (Option D). It is less likely that he is getting ready to clean up his painting supplies (Option E) if he is actively using them. To gather more information about the activity taking place, let's check a timestamp midway through the video.*
***Next timestamp: 00:01:30".***

At step S411, the first computing device extracts the frame at the specified timestamp from the video, transmits it to the object detector for analysis, and then receives captions of detect objects and actions (if any) from the object detector.

At step S412, the first computing device transmits the following visual description to the LLM:
*"FRAME DESCRIPTION On timestamp 00:01:30 the frame contains the following objects balustrade, brush, draw, hand, person, man, mark, paint brush, pencil, stair, tape, tool* [...]".

At step S413, the LLM transmits the following response to the first computing device based on the visual description:
*"The presence of the man, a paint brush, pencil, and other tools suggests that some form of painting activity is still occurring at this timestamp. The presence of the tape could potentially indicate preparation for painting or clean up after painting. To understand the specific action taking place at this moment, I will ask the following question:*

***Next question: Is the man actively painting or preparing to paint at this moment?"***

At step S414, the first computing device receives the response, transmits the question and the frame to the VLM, and then receives the answer from the VLM.

At step S415, the first computing device transmits the following answer to the LLM: *"Answer: actively painting".*

At step S416, the LLM transmits the following response to the first computing device based on the answer:
*"Given that the man is actively painting at the 1:30 timestamp, it can be inferred that the main objective of his activity is not preparing to paint a picture (Option B) or taking a break from painting (Option D). It also seems unlikely that he is getting ready to clean up his painting supplies (Option E) since he is in the middle of painting. To ensure the most accurate answer, let's check a timestamp closer to the end of the video.*
***Next timestamp: 00:02:30".***

At step S417, the first computing device extracts the frame at the specified timestamp from the video, transmits it to the object detector for analysis, and then receives captions of detect objects and actions (if any) from the object detector.

At step S418, the first computing device transmits the following visual description to the LLM:
*"FRAME DESCRIPTION On timestamp 00:02:30 the frame contains the following objects brush, draw, drawing, hand, person, man, sea, paint brush, pencil* [...]"

At step S419, the LLM transmits the following response to the first computing device based on the visual description:
*"The presence of a man, a paint brush, and pencil, along with the activity of drawing, suggests that the painting activity is still taking place at this timestamp. There is no indication of cleaning up painting supplies or taking a break from painting. To confirm the ongoing activity, I will ask the following question:*

***Next question: Is the man still actively painting at this moment?"***

At step S420, the first computing device receives the response, transmits the question and the frame to the VLM, and then receives the answer from the VLM.

At step S421, the first computing device transmits the following answer to the LLM: *"Answer: yes".*

At step S422, the LLM outputs the following final response to the first computing device based on the answer:
*"Given that the man is still actively painting at the 2:30 timestamp, we can conclude that the main objective of his activity is not preparing to paint a picture (Option B), taking a break from painting (Option D), or getting ready to clean up his painting supplies (Option E). The logical answer, therefore, is:*
***Answer: C"***

Then the first computing device may output the answer "C" to a user requesting it.

In the third example application scenario, the system may further include a sixth computing device equipped with a camera, and the 3D scene may be a real-world one. The sixth computing device is able to move under remote control of the first computing device. Prior to implementing the step S105, the first computing device may transmit the geolocation information of the 3D scene and a pair of viewpoint and orientation to the sixth computing device to instruct it to move to the geolocation and then take a photo of the 3D scene at the viewpoint and orientation. The geolocation information may include Global Positioning System (hereinafter "GPS") coordinates. The six computing device then transmits the photo to the first computing device, which in turn generates the visual description of the photo via an object detector or a VQA model at the step S105.

Though in the different examples of each example application scenario described above, the same type of identifiers are communicated between different computing devices. That is, timestamps in the first example application scenario and pairs of viewpoint and orientation in the third example application scenario. However, different types of identifiers can be used in each example application scenario in further examples. For instance, after requesting the visual description of a certain frame, the LLM may further transmit the coordinates of a bounding to the first computing device as an identifier to request a more detailed description of the visual contents of a certain portion of the frame that is marked by the bounding box.

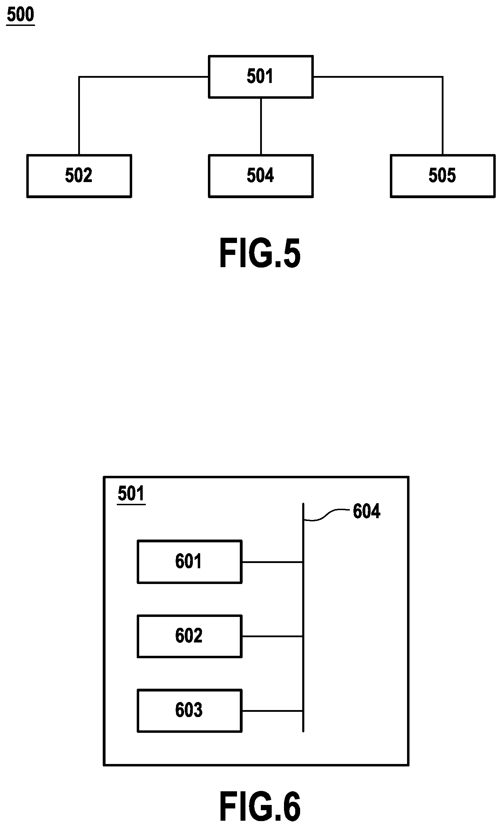

FIG. 5 illustrates an example 500 of the system implementing the method 100. The system 500 includes the first computing device 501, the second computing device 502, the fourth computing device 504, and the fifth computing device 505. As described above, the system 500 may further include the sixth computing device (not shown). Each of the second to sixth computing devices and the first computing device 501 are connected via a wired or wireless connection. the computer device 700 can communicate with other devices via one or more networks.

The network can be any type of network, such as a local area network, a wide-area network, a virtual private network, the Internet, an intranet, an extranet, a public switched telephone network, an infrared network, a wireless network, and any combination thereof. The network can support communications using any of a variety of commercially-available protocols, such as TCP/IP, UDP, OSI, FTP, UPnP, NFS, CIFS, AppleTalk, and the like.

FIG. 6 illustrates an example of the first computing device 501. As illustrated by FIG. 6, the first computing device 501 includes a transceiver 601 configured to, under the control of a processor 602, communicate with external devices via wired or wireless network(s) by transmitting or receiving network signals over network(s), the processor 602, and a computer-readable storage medium 603 having stored thereon instructions which, when executed by the processor 602, cause the processor 602 to perform the method 100. The first computing device 501 further includes a communication channel 604 configured to connect the transceiver 601, the processor 602, and the computer-readable storage medium 603.

Examples of the transceiver 601 include a network interface card such as an Ethernet card, an optical transceiver, a radio frequency transceiver, a universal serial bus controller, or any other device that can send or receive information.

Examples of the processor 602 a central processing unit (hereinafter "CPU"), a vision processing unit (hereinafter "VPU"), a graphics processing unit (hereinafter "GPU"), a tensor processing unit (hereinafter "TPU"), a neural processing unit (hereinafter "NPU"), a neural processing engine, a core of a CPU, VPU, GPU, TPU, NPU or another processing device, an application processor, a display controller, an application specific integrated circuit (hereinafter "ASIC"), a field programmable gate array (hereinafter "FPGA"), a coprocessor, or any other hardware configured to function as a processor.

The first computing device 501 may further include input component(s) configured to receive user input and output component(s) (not shown) configured to output information to the user. An input component may be a touch-sensitive screen, a mouse, a keyboard, a voice response system, a camera, a microphone, or any other device for detecting input from a human user. An output component may be a video graphics adapter card, a cathode ray tube (hereinafter "CRT") monitor, a liquid crystal display (hereinafter "LCD"), or any other device for output information to a user.

The first computing device 501 may further include a camera or an image sensor (not shown) configured to capture images under the control of the processor 602.

The different components of the first computing device 501 may be directly or indirectly coupled to each other physically, communicatively, or operationally via the communication channel 604. The communication channel 604 may include one or more buses (such as an address bus, data bus or combination thereof), an inter-process communication data structure, or any other means for communicating data. The components of the first computer device 501 as described above need not to be enclosed within a single enclosure or even located in close proximity to one another.

### Experiments

Several experiments have been conducted by the inventors to evaluate the proposed method 100. The experiments use the OpenAI library for LLM interactions and the GPT-4 API hosted on Azure, using both 8k- and 32k- context -sized models (depending on the input size), with default GPT-4 parameters as suggested by OpenAI. InstructBLIP-Vicuna-13B is used as the VLM. RAM is used as the object detector. All of the VLM and LLM models used are pretrained, and the pipelines of solve each task operates in a zero-shot setting.

It is noted that InstructBLIP is selected as the most suitable VLM based on initial experimental evaluations. We compared multiple alternatives, including BLIP2 models for both captioning and VQA tasks, only using the RAM model, and using the BLIP2 model with a predefined set of questions. Preliminary experiments indicate that InstructBLIP shows the most effective performance in the three search tasks, including the video object search task, video action search task, and the video-language understanding task. Specifically, InstructBLIP outperformed BLIP2-FLAN-T5-XXL, BLIP2-OPT-6.7B [21], and OpenFlamingo-9B (with MPT-7B) [22] by generating more detailed and precise captions (and answers) for the image, while reducing the number of hallucinations. RAM is used to generate detailed captions, as it gives the best performance in comparison to captions generated by BLIP2 and InstructBLIP during preliminary experimentation.

The software framework/system implementing the method 100 is referred to in this "Experiments" section as "ConVLM". Experiments results demonstrate that ConVLM outperforms state-of-the-art methods and established baselines on all three tasks. ConVLM achieves the beast performance on the EgoSchema benchmark. Below, the data used in the experiments is first introduced, followed by the experimental details. The evaluation details are then described.

### 1- Datasets

**EK55** [23]. For the video object search task, the Epic-Kitchens-55 (EK55) dataset is used. In contrast to the new Epic-Kitchens-100 dataset, EK55 provides high level intent descriptions. Videos that are shorter than 10 minutes are filtered out. The action segment annotations (in verb-noun form) are used to get the list of active objects involved in the videos. Hands, furniture-related objects, materials (see, for example, reference [24]), cleaning supplies, and containers are excluded from the experiments, because of their frequent presence in video frames. A randomly selected sample of 500 objects across 68 videos is used for evaluation.

**Ego4D** [25]. For the video action search task, a random sample of 500 actions is slected from 392 videos from the Long Term Anticipation benchmark of the Ego4D dataset. Actions are given as verb-noun pairs (including synonyms).

EgoSchema [26]. For the video-language understanding task, the EgoSchema dataset is used. EgoSchema is a long-form video question-answering dataset, and is designed specifically for the evaluation of the video-language understanding task that requires temporal reasoning. This curated dataset contains 5031 multiple-choice (five options) questions paired with 3-minute clips (sourced from Ego4D) from a diverse set of human activities and settings

### 2- Experimental Details

### 2-1 Tasks

Three video understanding tasks are evaluated on: video object search, video action search, and video language understanding. In the experimental setup, the high-level intent description of the camera wearer provided by the datasets is used as part of the context description.

**Video object search.** The task involves locating a specified object within a long video. More specifically, given an object label, the objective is to pinpoint a single timestamp in the video where the target object appears, regardless of its involvement in any action.

An example task is: *"Find garlic in a 13:26 minutes video of a person making curry".*

**Video action search.** Similarly, the goal is to pinpoint a single timestamp, which belongs to the segment of the specified target action.

An example task is: *"Find grind metal in a 5:16 minutes video of a person in Blacksmith scenario".*

**Video-Language understanding.** In this setting, the task is to provide an answer to a multiple-choice question that requires spatio-temporal reasoning about the video.

An example task is: *"Question: Analyze the overarching theme of the video and c's primary objective. How do the actions c is performing contribute to their purpose?"*

### 2-2 Metrics

The following metrics are used to evaluate the performance of the model on the search tasks within a specific frame budget:
- Success Rate: the success rate is defined as the primary measure of the VSV task that measures the percentage of video clips where the target has been successfully found.
- AUC: the area under the curve (herein "AUC") where the x-axis is the number of the frame budget and the y- axis is the success rate is computed.
- True Positive Rate (hereinafter "TPR"): the proportion of actually successful video samples that are considered successful by the model is calculated.
- Accuracy: Success rate multiplied by the TPR.

This set of metrics allows us to evaluate both the quality of results and the efficiency with which the target is found.

### 2-3 Protocol

For each evaluation task, a fixed evaluation dataset to be used for all the methods is randomly selected. Note that the evaluation process may fail with an exception (which sometimes happens due to OpenAI content filters or very slow API responses causing timeouts), and in cases of crashed and out-of-budget runs, the sample is immediately regarded as non-successful.

For the visual search task, the true positive rate is computed by human manual verification. Reported successful examples were reviewed and manually verified for correctness. This is caused by the fact that object annotations in EK55 are very sparse and only contain active objects that are interacted with by hand, whereas our task does not have such constraint and all instances throughout the videos are considered. The frame budget of 25 frames is selected for both object and action search tasks.

For the video-language understanding task, the answers given by the model were compared with the known ground-truth answers. The evaluation results of the whole dataset are obtained by submitting the answers to Kaggle for evaluation. For this task, we set the frame budget to 10 frames.

### 2-4 Baselines

For the video object search and video action search tasks, three baselines below are considered for these two tasks. The success rate associated with a specified frame budget is the number of tasks where the target is present in at least one of the selected frames. The three baselines are as follows.
- Linear (going through the video and taking evenly spaced frames such as a frame per minute): We get the specified number of evenly spread-out frames (from the beginning to the end of the video).
- Binary (frames are obtained via binary subdivision): Points are selected as the nodes of a binary tree which recursively divides the video in half. (With some of the points being discarded).
- Random (getting a random set of frames): the specific number of random points inside the video are sampled.

For the video-language understanding task of EgoSchema, we consider existing SOTA approaches as baselines, including:
- FrozenBILM: a model adapting frozen multi-modal encoders for the Question Answering task
- VIOLET: a video-language transformer based on masked token modeling.
- mPLUG-Owl: a training strategy to add image and video modalities to existing language models.
- Intern Video: a video-language model trained jointly with masked video modeling and contrastive learning objectives, adapted to the VQA task by the authors.

### 2-5 Prompts

### 2-5-1 System Prompt

After preliminary experiments, we settled on the system prompt described in example 200 above, which suggested the model to use the chain of thought approach, and tries to reduce the number of instances of the model giving up early. We tested various other system prompts, including one intended to use with the Tree-Of-Thought strategy, but they negatively impacted the performance. Below is one example.

### Discarded tree-of-thoughts system prompt:

*"What would you like ChatGPT to know about you to provide better responses? I prefer using the Tree of Thoughts method in problem-solving, which involves a four-phase process: brainstorming, evaluation, expansion, and decision. I value creative and diverse solutions, objective evaluation, detailed expansion, and justified decisions. Please follow this method in responding to my queries. How would you like ChatGPT to respond? I would like ChatGPT to respond by adhering to the Tree of Thoughts method. In your response, please include the following phases: Brainstorming: Provide multiple diverse solutions to the problem. Evaluation: Assess each solutions pros and cons, including factors like feasibility, effort, and potential success. Expansion: Delve deeper into each solution, outlining implementation strategies, potential scenarios, and ways to overcome challenges. Decision: Rank the solutions based on the evaluations, providing justifications for the rankings. Please ensure that the response is structured, clear, and follows the ToT method for comprehensive problem-solving."*

The prompting approach didn't prevent the model from giving up early, and additionally, caused the model to run out of context space and slowed down the LLM evaluation.

### 2-5-2 The initial Prompt

The initial prompts for the three tasks are illustrated in examples 200-400. Ablations made changes to the initial prompt. For instance, the models not having dynamic questions don't include the VQA Interaction rules, while the models excluding captions don't mention the list of objects. Depending on the presence and absence of the local frame context (captions), the prompt for LLM after the new frame varied between the following:
*"Selected frame 00:03:30. You can ask questions."*
*"FRAME DESCRIPTION. On timestamp 00:03:30 the frame contains the following objects cabinet, cutlery, drawer* [...]" .

In addition, for the Static questions baseline, the following strings were used as prompts for InstructBLIP2 for:
*"The frame contains the following kitchen utensils and ingredients:* [...]"
*"The frame contains a person on the kitchen doing* [...]".

### 3- Results

**Video Object Search.** Table 1 shows the results of ConVLM on the video object search task evaluated on the EK55 dataset. We see that our method outperforms the compared baseline and achieves a high success rate of 77.2%, which is more than double the baseline success rate.

**Table 1. Evaluation of video object search on EK55. We evaluate our method ConVLM on the video object search task and compare it against several baselines. We observe that our method outperforms all baselines in all metrics.**

| **Method** | | **Succ (↑)** | **Acc (↑)** | | |
|---|---|---|---|---|---|
| Linear | | 32.8 | 32.8 | | |
| Binary | | 31.8 | 31.8 | | |
| Random | | 31.6 | 31.6 | | |

| **Captions** | **Questions** | **Succ (↑)** | **AUC (↑)** | **Acc (↑)** | **TPR (↑)** |
|---|---|---|---|---|---|
| **×** | Static | 44.6 | 0.34 | 30.0 | 67.2 |
| | Dynamic | 55.5 | 0.40 | 31.6 | 57.0 |
| ✔ | None | 52.8 | 0.45 | 46.4 | **88.8** |
| | Static | 56.7 | 0.47 | 48.4 | 85.4 |
| | Dynamic | **77.2** | **0.62** | **59.8** | 77.0 |

The results show that the VLM always has a significant impact on search performance. We test three options of VLM usage: None - caption-only (VQA is not performed); Static - a static set of questions (visible objects and actions) fixed ahead of time for considered frame; and Dynamic - the proposed approach (questions are generated by the LLM). Our proposed approach strongly outperforms all the ablations on Success, Accuracy, and the AUC metrics, with the hit to the TPR not being high enough to impact the performance.

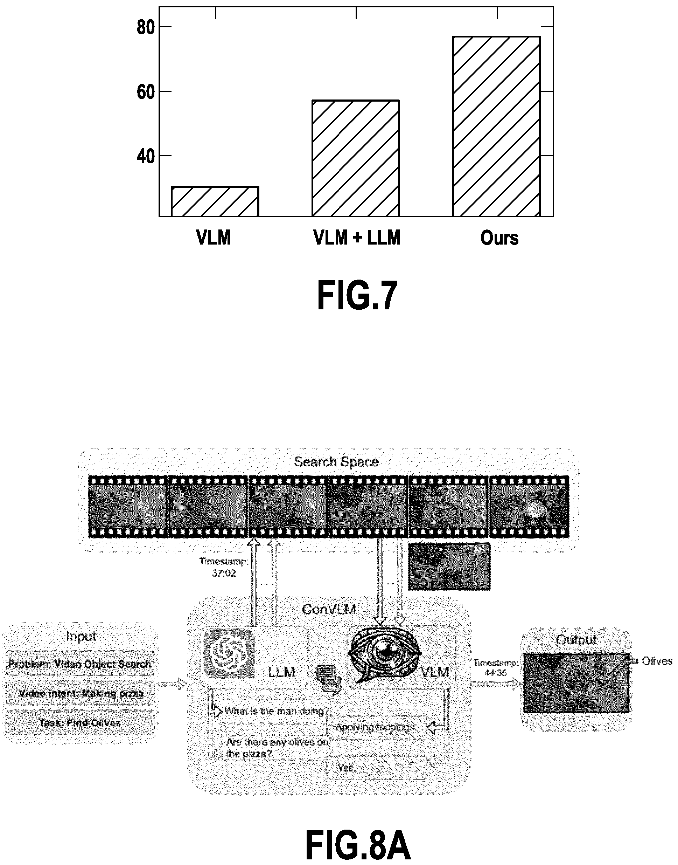

The caption-only approach expectedly has the highest TPR as RAM was trained for maximum precision. We also see that the visual context from captions significantly improves the success rate, as VLMs perform worse than RAM by missing a lot of the objects present on the frame. Additionally, the absence of this information reduces the relevance of questions generated by language model and makes hallucination-prone questions more probable (see FIG. 7).

**Video Action Search.** Table 2 shows that ConVLM outperforms baselines on the video action search task (the approaches with the best performances in Table 1, which are the dynamic ones, were selected to represent ConVLM in the experiments shown by Table 2). Ablations show that video context captured in the captions helps to boost the performance significantly. It demonstrates that our approach can successfully generalize to tasks requiring temporal understanding.

**Table 2. Evaluation of video action search on Ego4D. We compare our model with baselines.**

| **Method** | **Succ (↑)** | **Acc (↑)** | | |
|---|---|---|---|---|
| Linear | 11.6 | 11.6 | | |
| Binary | 11 | 11 | | |
| Random | 10.4 | 10.4 | | |

| **Captions** | **Succ (↑)** | **AUC (↑)** | **Acc (↑)** | **TPR (↑)** |
|---|---|---|---|---|
| **✔** | **73.6** | **0.61** | **28.5** | **52.6** |
| **×** | 53.4 | 0.39 | 63.3 | **32.8** |

**Video-Language Understanding.** We evaluate the ablations and variations of the proposed approach on the validation dataset (500 questions with publicly available answers) and ConVLM outperforms sota methods on the full dataset. We have outperformed all of the baselines by a significant margin (at least 7.6%) while having a limited budget of only 10 frames. We should note that EgoSchema is a very challenging dataset, where human accuracy is 75.0% unconstrained, or 67.2% given a 180-frame budget. The authors also note that existing 100B+ multimodal models only manage to achieve < 40% of accuracy.

**Table 3. Evaluation of video-language understanding task on EgoSchema. Results obtained on the EgoSchema full test and validation sets. We outperform the existing method by a significant margin, despite our method being zero-shot.**

| Method | Frame budget | Acc |
|---|---|---|
| ConVLM (ours) (full test set) | 10 | 39.7 |
| Random choice | N/A | 20.0 |
| FrozenBILM [5] | 10 | 26.4 |
| VIOLET [3] | 5 19.9 | 19.9 |
| VIOLET [3] | 75 | 19.6 |
| mPLUG-Owl [6] | 5 | 31.1 |
| mPLUG-Owl [6] | 10 | 29.6 |
| Intern Video [4] | 10 | 31.4 |
| Intern Video [4] | 90 | 32.1 |
| ConVLM-Caption-only (validation) | 10 | 41.7 |
| ConVLM-Question-only (validation) | 10 | 43.2 |
| ConVLM (validation) | 10 | 47.2 |

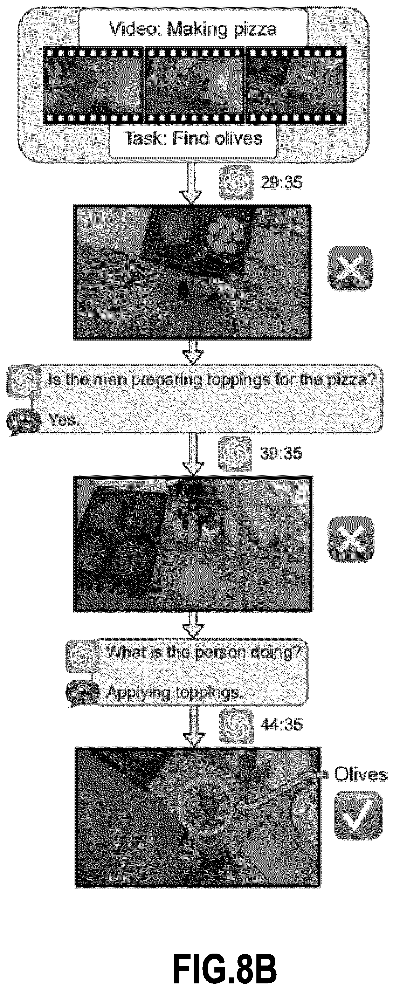

**Qualitative Results.** We qualitatively evaluate the results of running the workflow (FIGs. 8A and 8B) on all three tasks. It confirms ConVLM's proficiency in multiple reasoning techniques. The model decomposes videos into parts based on contextual cues, guesses the target object's likely segment, and, in unclear contexts, scans the video for an overview.

The model employs various search techniques, including linear, binary, ternary search, and divide-and-conquer, often making large jumps to localize the target segment, and then switching to smaller jumps for precision.

A usual thought process includes: estimating video de-composition into segments, selecting the target segment, making a rough position guess, and producing the corresponding timestamp. Initial frames often occur at the beginning, a few minutes after the start, middle, two-thirds, or three-fourths, a few minutes before the end, and the end.

The LLM uses its commonsense knowledge and reasoning to make the search more efficient, for example, retrieving the recipes or general cooking skills without being explicitly prompted. The model then uses this to localize the segment with the target. As an example: *"Since the video is about a prepared salad, we can make an assumption that the ingredients are likely to be added in order of their quantity in the salad. In most salad recipes, oil, especially olive oil, is added towards the end as a dressing. Therefore, we should start looking at the latter part of the video."* Given access to a VLM, the LLM often tries to use it for action recognition to guide the search. Additionally, the VLM is used to retrieve additional details for target fine grained objects. An illustrative example is the LLM asking *"Which color is the pot?"* when searching for a white pot, while the captions only mention a pot being present on the frame. On the other hand, adding a VLM exposes undesirable behavior. When the model is unsure, it often asks whether the target object is present. The VLMs we evaluated exhibit a bias towards hallucinating the presence of an object if asked whether it is present (e.g., we notice that the models often answer *"yes"* even on zero-images). We have then conducted an experiment to quantify it (Fig. 7), confirming that allowing the language model to explicitly query for object presence significantly increases of false positives retrieved. Querying the VLM on a random selection of the frames, only 30% of reported matches were true positives. When generating queries without context, the LLM sometimes directly queried the presence of the target, causing a significant number of false positives. Nonetheless, other reasoning performed by the mode allowed to increase the precision twofold. Providing the image context makes direct queries much less likely, further reducing the number of false positives. While experiments prohibiting the model from directly querying the VLM for the target object improved diversity of generated questions, the recall impact was high enough for the overall performance to suffer.

### 4- More performance comparisons

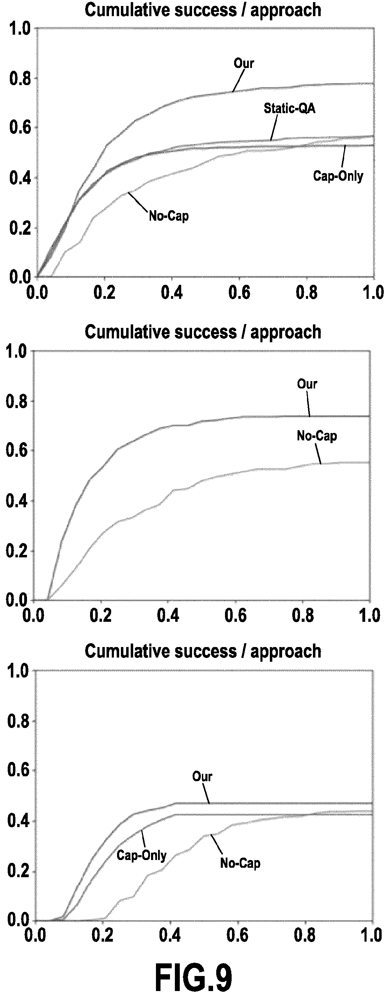

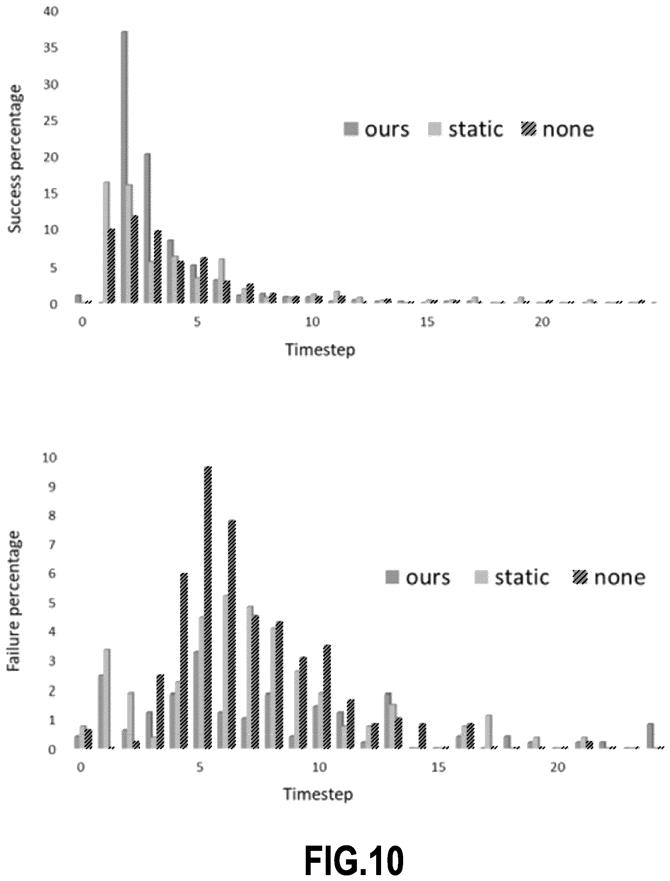

FIGs. 9 and 10 illustrate the cumulative success per number of frames curves for each task. They show both success and relative speed for each approach.

We believe that the proposed method can potentially be used in many other vision-language interactive tasks, with different search spaces beyond the ones experimented herein.

### References:

[1] Ding, Songtao, et al. "A long video caption generation algorithm for big video data retrieval." Future Generation Computer Systems 93 (2019): 583-595.
[2] Jiang, Chen, et al. "Learning segment similarity and alignment in large-scale content based video retrieval." Proceedings of the 29th ACM International Conference on Multimedia. 2021.
[3] Fu, Tsu-Jui, et al. "An empirical study of end-to-end video-language transformers with masked visual modeling." Proceedings of the IEEEICVF Conference on Computer Vision and Pattern Recognition. 2023.
[4] Wang, Yi, et al. "Internvideo: General video foundation models via generative and discriminative learning." arXiv preprint arXiv:2212.03191 (2022).
[5] Yang, Antoine, et al. "Zero-shot video question answering via frozen bidirectional language models." Advances in Neural Information Processing Systems 35 (2022): 124-141.
[6] Ye, Qinghao, et al. "mplug-owl: Modularization empowers large language models with multimodality." arXiv preprint arXiv:2304.14178 (2023).
[7] Vaswani, Ashish, et al. "Attention is all you need." Advances in neural information processing systems 30 (2017).
[8] Bommasani, Rishi, et al. "On the opportunities and risks of foundation models." arXiv preprint arXiv:2108.07258 (2021).
[9] Dai, Zihang, et al. "Transformer-xl: Attentive language models beyond a fixed-length context." arXiv preprint arXiv:1901.02860 (2019).
[10] Liu, Zhuang, et al. "A robustly optimized BERT pre-training approach with post-training." China National Conference on Chinese Computational Linguistics. Cham: Springer International Publishing, 2021.
[11] Brown, Tom, et al. "Language models are few-shot learners." Advances in neural information processing systems 33 (2020): 1877-1901.
[12] Hoffmann, Jordan, et al. "Training compute-optimal large language models." arXiv preprint arXiv:2203.15556 (2022).
[13] Smith, Shaden, et al. "Using deepspeed and megatron to train megatron-turing nlg 530b, a large-scale generative language model." arXiv preprint arXiv:2201.11990 (2022).
[14] Zhang, Susan, et al. "Opt: Open pre-trained transformer language models." arXiv preprint arXiv:2205.01068 (2022).
[15] Gupta, Tanmay, and Aniruddha Kembhavi. "Visual programming: Compositional visual reasoning without training." Proceedings of the IEEEICVF Conference on Computer Vision and Pattern Recognition. 2023.
[16] Surís, Dídac, Sachit Menon, and Carl Vondrick. "Vipergpt: Visual inference via python execution for reasoning." arXiv preprint arXiv:2303.08128 (2023).
[17] Zhang, Youcai, et al. "Recognize Anything: A Strong Image Tagging Model." arXiv preprint arXiv:2306.03514 (2023).
[18] Zhang, Jingyi, et al. "Vision-language models for vision tasks: A survey." arXiv preprint arXiv:2304.00685 (2023).
[19] Zhai, Yihang, et al. "When Parameter-efficient Tuning Meets General-purpose Vision-language Models." arXiv preprint arXiv:2312.12458 (2023).
[20] Wei, Jason, et al. "Chain-of-thought prompting elicits reasoning in large language models." Advances in Neural Information Processing Systems 35 (2022): 24824-24837.
[21] Li, Junnan, et al. "Blip: Bootstrapping language-image pre-training for unified vision-language understanding and generation." International Conference on Machine Learning. PMLR, 2022.
[22] Awadalla, Anas, et al. "Openflamingo: An open-source framework for training large autoregressive vision-language models." arXiv preprint arXiv:2308.01390 (2023).
[23] Damen, Dima, et al. "Scaling egocentric vision: The epic-kitchens dataset." Proceedings of the European conference on computer vision (ECCV). 2018.
[24] https://epic-kitchens.github.io/static/img/stats-figures/noun_categories.png
[25] Grauman, Kristen, et al. "Ego4d: Around the world in 3,000 hours of egocentric video." Proceedings of the IEEEICVF Conference on Computer Vision and Pattern Recognition. 2022.
[26] Mangalam, Karttikeya, Raiymbek Akshulakov, and Jitendra Malik. "Egoschema: A diagnostic benchmark for very long-form video language understanding." Advances in Neural Information Processing Systems 36 (2024).

## Claims

1. A computer-implemented method for visual search, the method comprising:
transmitting (S101, S202) to a language model a textual description describing a task to be completed by the language model through searching a visual space;
instructing (S101, S202) the language model to complete the task by selectively inspecting at least one portion of the visual space, the inspection comprising:
∘ deducing, based on the textual description, an identifier identifying one of the at least one portion within the visual space,
∘ requesting a visual description of the portion from the computer by returning the identifier, and
∘ determining whether the task is completed based on the visual description;
receiving the identifier from the language model;
generating (S105) the visual description; and
transmitting (S106, S205, S210) the visual description to the language model, so that the language model outputs (S109) a final response indicating an execution result of the task after determining (S108) whether the task is completed.

2. The method according to claim 1, wherein
the visual space is a video, and the identifier comprises a timestamp locating a frame in the video; or
the visual space is a two-dimensional "2D" image, and the identifier comprises location information of the portion in the image; or,
the visual space is a three-dimensional "3D" scene, and the identifier comprises a viewpoint and an orientation for rendering or capturing an image of the 3D scene.

3. The method according to claim 1 or 2, further comprising:
instructing (S201) the language model to apply logical step-by-step reasoning approach to complete the task, or,
informing (S202) the language model of a maximum number of portions of the visual space that the language model is allowed to inspect to complete the task, or,
instructing (S201) the language model not to refuse to complete the task due to not having enough information, or
instructing (S202) the language model to explain the deduction of the identifier.

4. The method according to any one of the claims 1 to 3, wherein the inspection further comprises: in response to determining that the task is not completed, proceeding to inspecting another portion of the visual space by: deducing, based on information received from the computer that is related to the task, another identifier identifying the other portion within the visual space, requesting a visual description of the other portion from the computer by returning the other identifier, and determining whether the task is completed based on the visual description of the other portion; or
the method further comprises instructing (S202) the language model to output a final response indicating that the task is successfully completed in response to determining that the task is completed; or
the method further comprises instructing (S202) the language model to output a final response indicating that the language model fails to complete the task in response to determining that the task is not completed, if the number of one or more visual space portions the language model has inspected to complete the task reaches a given limit.

5. The method according to any one of the claims 1 to 4, wherein the task comprises finding a target comprising: an object, an action, or an answer to a question related to contents of the visual space.

6. The method according to claim 5, wherein the textual description describes multiple choices for answering the question; or,
the textual description confirms presence of the target in the visual space.

7. The method according to any one of the claims 1 to 6, further comprising:
instructing (S207) the language model to ask a question about contents of the portion;
receiving (S209) the question from the language model; and
generating (S209) an answer to the question by using a visual question-answering model to analyze the portion, wherein the visual description comprises the answer.

8. The method according to any one of the claims 1 to 7, after receiving the identifier from the language model, further comprising:
detecting (S204) at least one object in the portion via an object detector, wherein the visual description describes the at least one object.

9. The method according to any one of the claims 1 to 8, further comprising:
informing (S202) the language model of a visual question-answering "VQA" model's accessibility, and indicating the maximum number of questions about contents of the portion that the language model is allowed to ask the VQA model to complete the task.

10. The method according to any one of the claims 1 to 9, wherein the textual description describes context of the visual space; or
the method further comprises obtaining an upper limit of the identifier's value, and the textual description indicates the upper limit.

11. A method for visual search, implemented by a computer using a language model, the method comprising:
receiving (S102) from a computer program other than the language model, a textual description describing a task to be completed by the language model through searching a visual space;
receiving (S102) from the computer program one or more instructions instructing the language model to complete the task by selectively inspecting at least one portion of the visual space, the inspection comprising:
∘ deducing, based on the textual description, an identifier identifying one of the at least one portion within the visual space,
∘ requesting a visual description of the portion from the computer program by returning the identifier, and
∘ determining whether the task is completed based on the visual description;
deducing (S103) the identifier based on the textual description and the one or more instructions;
returning (S104, S203) the identifier to the computer program;
receiving (S107) the visual description from the computer program;
determining (S108, S206, S211) whether the task is completed based on the visual description; and
outputting (S109, S232) a final response indicating an execution result of the task.

12. The method according to claim 11, wherein deducing the identifier based on the textual description and the one or more instructions comprise:
deducing (S206) a particular segment of the visual space where the inspection should be performed to complete the task; and
estimating (S206) an identifier identifying a visual space portion comprised in the particular segment, wherein returning the identifier comprises:
returning (S206) the estimated identifier.

13. A computer program product comprising instructions which, when executed by a processor (602), cause the processor (602) to perform the method according to any one of the claims 1 to 10 or the method according to claim 11 or 12.

14. A computer-readable medium (603) comprising the computer program product of claim 13.

15. A computing device (501), comprising:
a processor (602); and
the computer-readable medium (603) according to claim 14.

## Amended claims

### Amended claims in accordance with Rule 137(2) EPC.

1. A computer-implemented method for visual search, the method comprising:
transmitting (S101, S202) to a language model a textual description describing a task to be completed by the language model through searching a visual space, wherein the task comprises finding a target comprising: an object, an action, or an answer to a question related to contents of the visual space;
**characterized in that**, the method further comprising:
transmitting (S101, S202) one or more instructions to the language model to instruct the language model to complete the task by selectively inspecting at least one portion of the visual space, the inspection comprising:
o deducing, based on the textual description, an identifier identifying one of the at least one portion within the visual space, and
o requesting a visual description of the portion from the computer by returning the identifier;
receiving the identifier from the language model, wherein the identifier is one deduced by the language model as identifying a portion of the visual space where the target is likely to be found or where the inspection should be performed to complete the task;
generating (S105) the visual description; and
transmitting (S106, S205, S210) the visual description to the language model, so that the language model determines (S108) whether the task is completed based on the visual description and the one or more instructions, and outputs (S109) a final response indicating an execution result of the task after selectively inspecting the at least one portion, wherein if the language model determines that the task is completed through selectively inspecting the at least one portion:
the final response indicates a location of the target in the visual space or indicates the answer; or,
the method further comprises receiving the final response from the language model and outputting a response to a user or another computing device based on the final response, said response indicating a location of the target in the visual space if the task comprises locating the target in the visual space or comprising the answer if the target comprises the answer.

2. The method according to claim 1, wherein
the visual space is a video, and the identifier comprises a timestamp locating a frame in the video; or
the visual space is a two-dimensional "2D" image, and the identifier comprises location information of the portion in the image; or,
the visual space is a three-dimensional "3D" scene, and the identifier comprises a viewpoint and an orientation for rendering or capturing an image of the 3D scene.

3. The method according to claim 1 or 2, further comprising:
instructing (S201) the language model to apply logical step-by-step reasoning approach to complete the task, or,
informing (S202) the language model of a maximum number of portions of the visual space that the language model is allowed to inspect to complete the task, or,
instructing (S201) the language model not to refuse to complete the task due to not having enough information, or
instructing (S202) the language model to explain the deduction of the identifier.

4. The method according to any one of the claims 1 to 3, wherein the inspection further comprises: in response to determining that the task is not completed, proceeding to inspecting another portion of the visual space by: deducing, based on information received from the computer that is related to the task, another identifier identifying the other portion within the visual space, requesting a visual description of the other portion from the computer by returning the other identifier, and determining whether the task is completed based on the visual description of the other portion; or
the method further comprises instructing (S202) the language model to output a final response indicating that the task is successfully completed in response to determining that the task is completed; or
the method further comprises instructing (S202) the language model to output a final response indicating that the language model fails to complete the task in response to determining that the task is not completed, if the number of one or more visual space portions the language model has inspected to complete the task reaches a given limit.

5. The method according to claim 1, wherein the textual description describes multiple choices for answering the question; or,
the textual description confirms presence of the target in the visual space.

6. The method according to any one of the claims 1 to 5, further comprising:
instructing (S207) the language model to ask a question about contents of the portion;
receiving (S209) the question from the language model; and
generating (S209) an answer to the question by using a visual question-answering model to analyze the portion, wherein the visual description comprises the answer.

7. The method according to any one of the claims 1 to 6, after receiving the identifier from the language model, further comprising:
detecting (S204) at least one object in the portion via an object detector, wherein the visual description describes the at least one object.

8. The method according to any one of the claims 1 to 7, further comprising:
informing (S202) the language model of a visual question-answering "VQA" model's accessibility, and indicating the maximum number of questions about contents of the portion that the language model is allowed to ask the VQA model to complete the task.

9. The method according to any one of the claims 1 to 8, wherein the textual description describes context of the visual space; or
the method further comprises obtaining an upper limit of the identifier's value, and the textual description indicates the upper limit.

10. A method for visual search, implemented by a computer using a language model, the method comprising:
receiving (S102) from a computer program other than the language model, a textual description describing a task to be completed by the language model through searching a visual space, wherein the task comprises finding a target comprising: an object, an action, or an answer to a question related to contents of the visual space;
**characterized in that**, the method further comprising:
receiving (S102) from the computer program one or more instructions instructing the language model to complete the task by selectively inspecting at least one portion of the visual space by:
o deducing, based on the textual description, an identifier identifying one of the at least one portion within the visual space,
o requesting a visual description of the portion from the computer program by returning the identifier, and
o determining whether the task is completed based on the visual description;
deducing (S103) the identifier based on the textual description and the one or more instructions, wherein the identifier is one deduced by the language model as identifying a portion of the visual space where the target is likely to be found or where the inspection should be performed to complete the task;
returning (S104, S203) the identifier to the computer program;
receiving (S107) the visual description from the computer program;
determining (S108, S206, S211) whether the task is completed based on the visual description; and
outputting (S109, S232) a final response indicating an execution result of the task after inspecting the at least one portion, wherein if the language model determines that the task is completed through inspecting the at least one portion:
the final response indicates a location of the target in the visual space or indicates the answer; or,
the final response is output to the computer program so that the computer program outputs a response to a user or another computing device based on the final response, said response indicating a location of the target in the visual space if the task comprises locating the target in the visual space or comprising the answer if the target comprises the answer.

11. The method according to claim 10, wherein deducing the identifier based on the textual description and the one or more instructions comprise:
deducing (S206) a particular segment of the visual space where the inspection should be performed to complete the task or where the target is likely to be found; and
determining an identifier identifying a visual space portion delimiting the particula segment, or estimating (S206) an identifier identifying a visual space portion comprised in the particular segment, wherein returning the identifier comprises:
returning (S206) the determined or estimated identifier.

12. The method according to claim 11, further comprising, prior to outputting (S109, S232) the final response:
deducing, based on the visual description or the textual description, another segment of the visual space where the inspection should be performed in response to determining (S108, S206, S211) that the task is not completed based on the visual description, the other segment being contained within the particular segment;
estimating another identifier identifying another portion of the visual space that is comprised in the other segment; and
requesting a visual description of the other portion by returning the other identifier.

13. A computer program product comprising instructions which, when executed by a processor (602), cause the processor (602) to perform the method according to any one of the claims 1 to 9 or 10 to 12.

14. A computer-readable medium (603) comprising the computer program product of claim 13.

15. A computing device (501), comprising:
a processor (602); and
the computer-readable medium (603) according to claim 14.
